# EUROPEAN PATENT APPLICATION

(11) **EP 1 189 392 A1**
(43) Date of publication of application: **20.03.2002**
(21) Application number: 00931665.4
(22) Date of filing: 01.06.2000
(51) Int. Cl.: H04L 12/40, H04N 7/173

(54) **DATA TRANSMISSION METHOD AND DATA TRANSMISSION DEVICE**

(30) Priority: 03.06.1999 JP 15715799; 23.05.2000 JP 2000151618
(71) Applicant: Aichidenshi Kabushiki Kaisha, Nagoya-shi, Aichi 460-0012 (JP)
(72) Inventor: MIYOSHI, Kengo, Aichidenshi K.K. Tokyo Shisha, Tokyo 104-0052 (JP); WAKITA, Nozomi, Aichidenshi K.K. TokyoShisha, Tokyo 104-0052 (JP); YAMASHITA, Shinichiro, Aichidenshi K.K. Kani Plant, Kani, Gifu 509-0249 (JP)
(74) Representative: Leson, Thomas Johannes Alois, Dipl.-Ing.
(86) International application number: JP0003579
(87) International publication number: WO0076135

(57) **Abstract**

A data transmission system which removes ingress noise of a LAN using CATV network system. A data transmission device 60 to which a superior cable modem 61 and an inferior cable modem 62 are connected in series is installed at an input of a network 50 in a multiple dwelling house. Upstream high-frequency modulation signal is once converted by the inferior cable modem 62 into Ethernet base band signal, then again modulated by the superior cable modem 61 and transferred. Because ingress noise is analogue signal, it is removed by this conversion. As a result, data transmission performance is improved and a LAN can be installed even in the network 50 in a multiple dwelling house with a lot of ingress noise.

## Description

### BACKGROUND OF THE INVENTION

### Field of the Invention

The present invention relates to a data transmission system and its equipment which decreases ingress noise in a network and improves quality of transmitted data.

For example, the present invention may be applied to construct a local area network (LAN), which enables a fast data transmission such as Internet in a CATV system connecting a CATV center and each multiple dwelling house and each home.

### Description of the Related Art

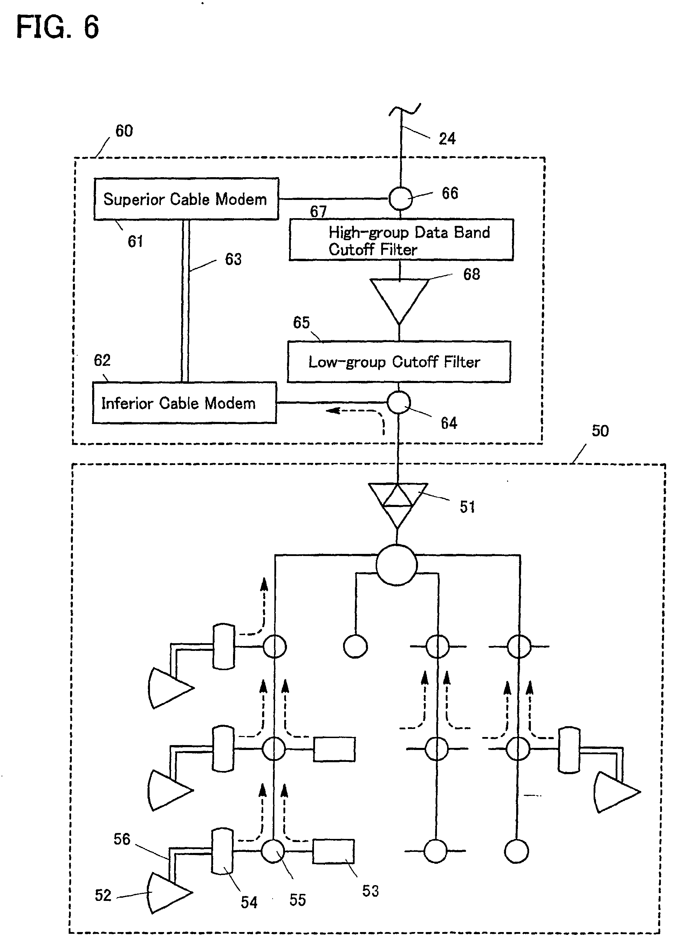

Conventionally, Internet service using a CATV system has been known. A conventional CATV system enables each terminal equipment to receive TV signal and to transmit data by connecting it to a center through Internet. FIG. 6 shows such a CATV system. The conventional CATV system consists of a central equipment 22 in a CATV station 20, a trunk cable 25 connected to the central equipment 22, a repeater 30 which is installed at each predetermined portion of the trunk cable 25, a branch cable 24 which is branched at the repeater 30, and a network 50 in a multiple dwelling house and a network 40 in home connected to the branch cable 24. The central equipment 22 is connected to Internet 10 through an Internet interface 21 installed in a CATV station.

The network 50 in a multiple dwelling house consists of an amplifier 51 which amplifies and transmits propagated high-frequency signal, a directional coupler 55 which branches signal amplified by the amplifier 51, and a terminal equipment 52 and a TV signal receiver 53 which are connected to the directional coupler 55. Generally, multiple terminal equipments 52 and TV signal receivers 53 are installed in a network 50 in a multiple dwelling house.

The network 40 in home consists of a directional coupler/distributor 41 which branches/distributes high-frequency signal propagated through the branch cable 24, a terminal equipment 42 which is connected to the directional coupler/distributor 41, and a TV signal receiver 43. The terminal equipments 52 and 42 installed in both networks 50 and 40 comprise cable modems 54 and 44, respectively, which modulate/demodulate high-frequency signal to Ethernet base band signal and Ethernet base band signal to high-frequency signal. Here the terminal equipments 52 and 42 are, for example, computer equipments.

Transmission system applied to such conventional CATV system is a broadband transmission system in which frequency of high-frequency signal (RF signal) is multiplied. Its upstream signal has a band ranging from 10 MHz to 65 MHz and downstream signal from 90 MHz to 770 MHz, and they are transmitted in duplex direction. For example, in order to transmit data, upstream signal uses 33 MHz and downstream signal 245 MHz.

Data signal inputted from the terminal equipment 52 is outputted to a twisted pair cable 56 by a predetermined system (10 BASE-T). The data outputted to the twisted pair cable 56 is modulated by the cable modem 54 and a carrier wave having 33 MHz of frequency is modulated and it is transmitted to the central equipment 22 installed in a CATV station 20.

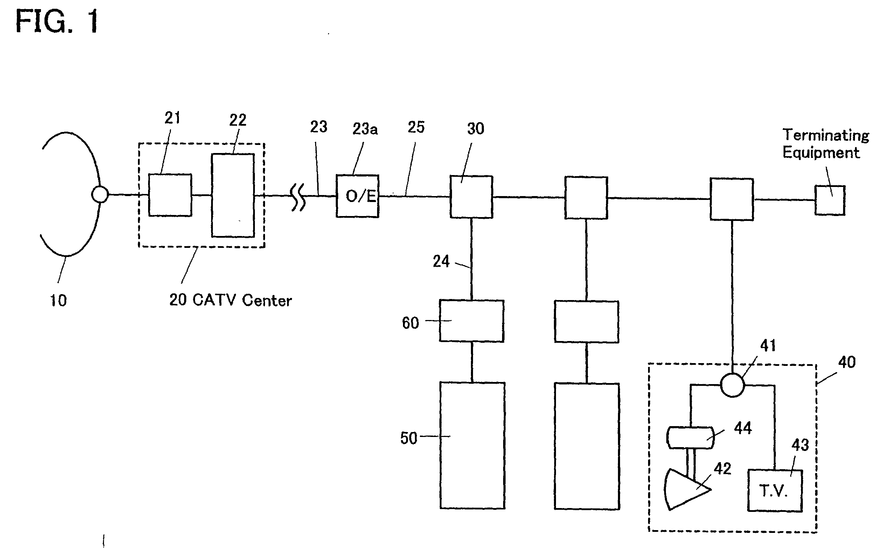

The central equipment 22 which received upstream signal having a high frequency of 33 MHz demodulates the signal by a cable modem which is not shown in Figure 1, and transmits the data signal to Internet 10 through, e.g., the Internet interface 21. A carrier wave having 245 MHz of frequency is modulated according to the data signal received from Internet 10 and transmitted to the terminal equipment 52. The cable modem 54 installed at the terminal equipment 52 receives and demodulate the 245 MHz of high-frequency signal, and it can obtain desired data. Accordingly, data transmission between arbitrary terminal equipments through Internet is possible.

However, problems persist in the conventional CATV system. In the conventional CATV system, noises are superposed to high-frequency signal which ascends from subscriber's terminal equipments 52 and 42 to a CATV station 20 through TV routes, connectors, cables, etc. as shown by broken lines. The noises from each terminal equipment join to be a larger noise at the exit of the network 50 in multiple dwelling house. Because of that, quality as a communication circuit deteriorates and data may not be transmitted to the central equipment 22 precisely. Especially, a lot of terminal equipments are installed in a network 50 in multiple dwelling house. That results in raising noise level of the network so much that it even prevents from providing CATV Internet service.

In order to prevent ingress noise from being outputted to the outside of a network 50 in a multiple dwelling house, it is tried to output upstream data signal through a part of downstream frequency band, having less noise compared with upstream frequency band. Problems, however, persist in this system. Because the system utilizes downstream band, it is required to have a specific structure, e.g., an amplifier by-passes signals of only a specific band.

Alternatively, a base band system can be applied in order to prevent noise from inflowing. However, problems persist in this system. An amplifier in this system is required to have a by-pass circuit, and CATV Internet service providers have difficulty in managing their billing and keeping their customers' privacy because freely transmitting or receiving data becomes possible. Data transmission speed is also a problem. In order to apply the base band system, almost all the equipments which constitutes the community antenna television network system must be replaced with specific equipments, which cost too much.

Therefore, the conventional systems cannot provide a cheap, convenient and high quality Internet service to all the offices and multiple dwelling houses which introduce a CATV system.

### SUMMARY OF THE INVENTION

Accordingly, in light of the above problems, an object of the present invention is to control ingress noise in upstream band of a local network, e.g., a network in a multiple dwelling house, and thereby to obtain a high-quality data transmission.

In order to achieve above object, a first aspect of the present invention is a data transmission system comprising a local network to which plural terminal equipments are connected and whose data transmission is carried out by using a high-frequency modulation signal and a transmission line to which the local network is connected. In the data transmission system, a demodulator which demodulates upstream high-frequency modulation signal transmitted toward the transmission line side into a data signal is installed at a node of the local network and the transmission line.

As described above, the upstream high-frequency modulation signal transmitted toward the transmission line side is once demodulated into the data signal at the node of the local network and the transmission line. That enables to remove upstream ingress noise. As a result, ingress noise which is superposed by a large number of terminal equipments in the local network is not transferred to the transmission line, and data transmission performance is improved. The type of the data signal obtained by modulating a high-frequency modulation signal is, for example, base band data signal, e.g., binary digital signal, and data signal of Ethernet. Here downstream signal received from the transmission line may be transmitted to the local network. Alternatively, downstream signal may be transmitted after demodulated and modulated. Here the local network is a network to which a large number of terminal equipments are connected, e.g., a network in a building or in a local area. So each part of a network can be defined as a local network. And in a local network in this system high-frequency modulation signal is used to transmit data. Generally, this data transmission system is a broadband transmission system with multiplex frequencies. Alternatively, the system can be a single-band transmission system. Further, television signal may be outputted to the downstream band of the local network. Alternatively, data transmission of only high-frequency modulation signal can be applied in the local network.

A second aspect of the present invention is to install a modulator at a node of the local network. The modulator modulates data signal which is demodulated by the demodulator into upstream high-frequency modulation signal.

Then the upstream high-frequency modulation signal in the local network is transmitted to the transmission line after demodulated and modulated. As a result, ingress noise in the local network is completely removed, and data transmission performance of the transmission line can be improved. Here a frequency band of the upstream high-frequency modulation signal in the local network may be or may not be the same as that of the upstream high-frequency modulation signal in the transmission line. When the frequency band of the signal in the local network is the same as that in the transmission line, only ingress noise is removed from an existing infrastructure which is constituted by a local network and transmission lines in an existing system.

A third aspect of the present invention is to install a modem (modulator-demodulator) which carries out demodulation and modulation as described above in sequence. As a result, upstream data signal becomes to have an improved resistivity for ingress noise. The signal demodulated into base band signal may have an arbitrary type if the signal is demodulated into base band signal and then modulated into high-frequency signal again.

A fourth aspect of the present invention is to install a first modem comprising a demodulator and a modulator, which modulates data signal obtained from downstream signal into downstream high-frequency modulation signal and transmits to the local network, at a node.

In order to remove upstream ingress noise from the local network, it is enough to install the demodulator explained in the first aspect, and in case that the upstream signal in the transmission line is high-frequency modulation signal, further the modulator as in the second aspect is required at a node of the local network and the transmission line. This system also demodulates and modulates downstream signal in the transmission line and then transmits the downstream high-frequency modulation signal to the transmission line. As a result, ingress noise existing in the downstream signal is also removed. The first modem is, for example, called a cable modem in a CATV network system, and it can be applied to an existing infrastructure of the network.

A fifth aspect of the present invention is to install a second modem which modulates data signal demodulated by the first modem into upstream high-frequency modulation signal and transmits the signal to the transmission line, and demodulates downstream high-frequency modulation signal received from the transmission line into data signal and outputs the signal to the first modem.

In the present system, the second modem is installed connected to the first modem. As a result, when the transmission line is a broad band high-frequency transmission line as in a CATV network system, upstream high-frequency modulation signal in a local network is demodulated, modulated and transmitted to the transmission line as upstream high-frequency modulation signal, and downstream high-frequency modulation signal is also demodulated, modulated and transmitted to the local network as downstream high-frequency modulation signal. Thus ingress noise in both upstream and downstream data signals are removed. The first and the second modems are called cable modems in a CATV network system, and they can be applied to an existing infrastructure of the network.

The type of the data signal obtained by demodulating a high-frequency modulation signal is, for example, a base band data signal, e.g., a binary digital signal, and alternatively a data signal of Ethernet. Here a frequency band of the upstream high-frequency modulation signal in the local network may be or may not be the same as that of the upstream high-frequency modulation signal in the transmission line. Also, a frequency band of the downstream high-frequency modulation signal in the transmission line may be or may not be the same as that of the downstream high-frequency modulation signal in the local network. When the frequency band of the signal in the local network is the same as that in the transmission line, it is not necessary to place any further specific equipment but the first and the second modems at a node of the local network and the transmission line of an existing system. The first modem and the second modem include a modem comprising a CPU which can be controlled by a center, or an intelligence modem.

A sixth aspect of the present invention is to install a duplex modem at a node of the local network and the transmission line. The duplex modem demodulates upstream high-frequency modulation signal transferred to the transmission line into a data signal, modulates the data signal into a upstream high-frequency modulation signal, demodulates downstream high-frequency modulation signal transferred to the local network into a data signal, and modulates the data signal into downstream high-frequency modulation signal.

In short, an equipment which demodulates and modulates in duplex direction is installed at a node of the local network and the transmission line. By installing this duplex modem, downstream signal and upstream signal becomes resistant to noise.

A seventh aspect of the present invention is to install an amplifier which is connected in parallel to a connection circuit of the demodulator and the modulator or the modem or a connection circuit of the first modem and the second modem by a directional coupler/distributor of an upstream side and a directional coupler/distributor of a downstream side and which amplifies and outputs the downstream signal toward the local network.

As a result, the signal in downstream high-group band is amplified by the amplifier and can be inputted to the local network. And the amplifier can have a structure to by-pass the data signal.

An eighth aspect of the present invention is that the system comprises a band splitter installed between an output terminal of the amplifier and the directional coupler/distributor of the downstream side and a terminating resistance set at an output terminal of a low-group band pass filter of the band splitter.

A high-frequency modulation signal, which is a data signal in upstream low-group band transmitted toward a route through which a signal of downstream high-group band passes, is prevented from reflecting to the downstream side and its transmission to the upstream is interrupted. As a result, a high-frequency modulation signal, which is upstream data signal of the local network in the downstream side, is not disturbed.

A ninth aspect of the present invention is that the transmission line is a data transmission line and that the system further comprises a router or a terminal adapter at a node of the local network. The router or the terminal adapter inputs, modulates and outputs a data signal demodulated by the first modem to the transmission line and receives, demodulates the downstream signal in the transmission line into a data signal and outputs to the first modem.

By adjusting this structure, it is possible to connect the transmission line, e.g., an ISDN transmission line and other data transmission lines to the local network. Upstream ingress noise in the local network is removed and the upstream data signal is transmitted to the data transmission line. Consequently, data transmission quality of the system is improved.

A tenth aspect of the present invention is that the transmission line is a CATV transmission line and the local network is a community TV network adjusted in a predetermined area such as a multiple dwelling house, a building, and a factory in which plural numbers of terminal equipments are connected.

In a CATV transmission line, downstream band is used to transmit TV signal and upstream band to transmit high-frequency data signal. The band, especially its low-group upstream band is largely affected by ingress noise. But in the present system, a high-frequency data signal, whose ingress noise generated in the local network is completely removed at an exit of the network, is transmitted to a transmission line. That largely improves data transmission quality of the system. TV signal exists in downstream band in such a local network and its upstream band is used for data transmission.

An eleventh aspect of the present invention is that a center of the CATV network transmission line is connected to Internet, receives upstream high-frequency modulation signal from the transmission line, demodulates it to a signal, transmits the signal to Internet, receives a signal from Internet, modulates the signal into downstream high-frequency modulation signal, and transmits it to the transmission line.

As a result, plural numbers of terminal equipments connected to the local network can be connected to Internet through CATV transmission lines, which enables a data transmission of high quality. Only by placing this system at a node of the local network and the transmission line, terminal equipments to which cable modems are connected for CATV network system can have a high data transmission performance without any additional equipment.

A twelfth aspect of the present invention is that the transmission line is connected to Internet. Only by installing this system at a node of the local network and the transmission line, terminal equipments in the local network can have Internet communication with high quality.

A thirteenth aspect of the present invention is that the local network consists of a network comprising transmission lines which are branched in a CATV network.

That is a network having expanded region of the local network. A network of downstream side of an arbitrary node can be regarded as a local network in CATV transmission lines having a tree branch structure. And by installing the present system at the node, upstream ingress noise at this node can be removed efficiently. That enables the local network to have a high quality data transmission.

A fourteenth aspect of the present invention is about a data transmission equipment in a data transmission system comprising a local network, which is connected to plural numbers of terminal equipments and carries out data transmission by using high-frequency modulation signal. The data transmission equipment is installed at a node of the local network and a transmission line, and comprises a first modem, which demodulates upstream high-frequency modulation signal into a data signal and which modulates a data signal obtained from downstream high-frequency modulation signal of the transmission line into downstream high-frequency modulation signal, and a second modem, which modulates the data signal demodulated by the first modem into upstream high-frequency modulation signal and transmits to the transmission line, and which demodulates downstream high-frequency modulation signal received from the transmission line into data signal and outputs it to the first modem.

By installing this data transmission device at a node of the local network and the transmission line, not only upstream ingress noise but also downstream ingress noise in the transmission line can be removed. Here a frequency band of the upstream data signals in the transmission line and in the local network may be or may not be the same as that of the downstream data signals in the transmission line and in the local network. When the frequency band of the upstream data signal is not the same as that of the downstream signal, its band is converted by the present device.

A fifteenth aspect of the present invention is to install a modem which demodulates upstream high-frequency modulation signal transmitted to the transmission line side and modulates the data signal into upstream high-frequency modulation signal.

Because upstream high-frequency modulation signal is modulated again and transmitted to the upstream side of the transmission line, the data signal cannot be interrupted by ingress noise.

A sixteenth aspect of the present invention is that the data transmission equipment comprises a duplex modem which demodulates upstream high-frequency modulation signal transmitted to the transmission line side into data signal and modulates the data signal into upstream high-frequency modulation signal, demodulates downstream high-frequency modulation signal transmitted to the local network side into data signal and modulates the data signal into downstream high-frequency modulation signal.

As a result, downstream and upstream ingress noise in data signal can be removed, and that improves accuracy of data transmission.

A seventeenth aspect of the present invention is that the data transmission equipment comprises directional coupler/distributors placed on both upstream and downstream sides, a through circuit connected to the two directional coupler/distributors, and a low-group cutoff filter which does not reflect but absorbs upstream low-group band signal and lets downstream signal pass to the downstream side.

As a result, reflection of high-frequency modulation signal, or upstream data signal, is prevented, and accuracy of data transmission in the local network is improved.

An eighteenth aspect of the present invention is that the data transmission equipment comprises an amplifier which amplifies and outputs downstream signal to the local network side, directional coupler/distributors placed on input port and output port sides of the amplifier, a band splitter placed between output port of the amplifier and the band splitter on the output port side, and a terminating resistance installed on the low-group band pass filter side of the band splitter.

As a result, reflection of high-frequency modulation signal, or upstream data signal, is prevented, and accuracy of data transmission in the local network is improved.

A nineteenth aspect of the present invention is that the data transmission equipment comprises a high-group data band cutoff filter which is placed between input port of the amplifier and the directional coupler/distributor set on the input port side and cutoffs downstream signal of predetermined high-group data band.

As a result, reflection of high-frequency modulation signal, or downstream data signal of high-group band, to upstream side of the transmission line is prevented, and accuracy of data transmission in the transmission line is improved.

A twentieth aspect of the present invention is that the data transmission equipment comprises a pair of band splitters each placed on upstream and downstream sides, a through circuit, connecting the two band splitters, which let a high-group band signal pass, or an amplifier which is injected in a circuit, through which the high-group band signal passes, and amplifies signal to the downstream direction.

In short, the downstream high-group band signal (data signal or TV signal) detours around the equipments such as modem, and transmitted to the local network side. Accordingly, a conventional CATV transmission lines are not necessarily changed.

A twenty-first aspect of the present invention is that a high-group data band cutoff filter, which does not reflect and does not let a predetermined high-group data band signal pass, is set between the input port of the amplifier and the output port of the directional coupler/distributor installed on the input side of the amplifier.

As a result, reflection of high-frequency modulation signal, or downstream data signal of high-group band, to upstream side of the transmission line is prevented, and accuracy of data transmission in the transmission line is improved.

### BRIEF DESCRIPTION OF THE DRAWING

FIG. 1 is a structural view showing a CATV system which applies a data transmission system in a first embodiment of the present invention;
FIG. 2 is a structural view showing a data transmission device and a network in a multiple dwelling house in a first embodiment of the present invention;
FIG. 3 is a structural view of the data transmission device in a first embodiment of the present invention;
FIG. 4 is a structural view of a system with a modulator and a demodulator shown in a second embodiment of the present invention;
FIG. 5 is a structural view of a system which enables to connect to ISDN transmission line shown in a third embodiment of the present invention;
FIG. 6 is a structural view showing CATV system which applies a data transmission system in another embodiment of the present invention;
FIG. 7 is a structural view showing CATV system which applies a data transmission system in an other embodiment of the present invention;
FIG. 8 is a structural view showing CATV system which applies a data transmission system in an other embodiment of the present invention;
FIG. 9 is a structural view showing CATV system which applies a data transmission system in an other embodiment of the present invention;
FIG. 10 is a structural view showing CATV system which applies a data transmission system in an other embodiment of the present invention;
FIG. 11 is a structural view showing CATV system which applies a data transmission system in an other embodiment of the present invention; and
FIG. 12 is a structural view showing a CATV system which uses a conventional cable modem.

### DETAILED DESCRIPTION OF THE PREFERRED EMBODIMENT

The present invention will now be described by way of specific embodiments; however, the present invention is not limited to the embodiments.

### (First Embodiment)

In this embodiment, an existing TV community network installed in a house or a multiple dwelling house is regarded as a local network. In short, the TV community network itself is realized as a LAN. Frequency band utilized in CATV transmission is divided into two_bands. One is in a region of 10 to 65 MHz upstream band toward a CATV center, the other is in a 90 to 770 MHz downstream band toward each terminal equipment connected to the CATV network. The upstream band is mainly used for transmission toward a CATV center, and the downstream band is for transmission of TV signal and data to each terminal equipment. A band in a region of 65 to 90 MHz is a guard band which divides the upstream and downstream bands. In this embodiment, upstream high-frequency modulation signal of 33 MHz and downstream high-frequency modulation signal of 245 MHz are respectively selected for data transmission.

FIG. 1 is a sectional view illustrating a CATV system applying a transmission system of the present invention. The CATV system in this embodiment comprises: a central equipment 22 installed in a CATV center 20; an optical fiber cable 23 connected to the central equipment 22; a photoelectric converter 23a which converts photo signal into electric signal; a trunk cable 25 extended from the photoelectric converter 23a; a repeater 30 installed at a predetermined part of the trunk cable 25; a branch cable 24 wired from the repeater 30; a data transmission device 60 which is connected to the branch cable 24 and reduces ingress noise; and a local network, or a network 50 in a multiple dwelling house and a network 40 in home, each of which is regarded as a local network, connected to the data transmission device 60. Here a transmission line represents line which transmits signals and consists of an optical fiber cable 23, a trunk cable 25, a branch cable 24, a repeater, etc.

The CATV center 20 is connected through an Internet interface 21 to an Internet 10, which enables it to have communication in duplex direction with other terminal equipments.

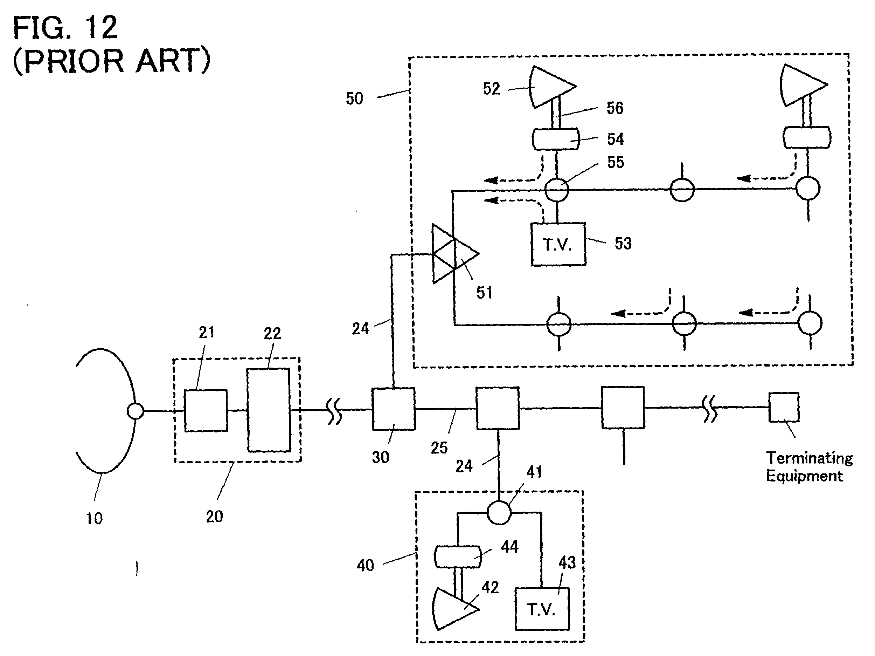

Because a structure of the network 40 in home and the network 50 in a multiple dwelling house is same as that of a conventional network shown in FIG. 12, each equipment in the networks 40 and 50 has the same figures corresponding to that in the conventional network in FIG. 12, and explanation of those equipments is abbreviated. In this embodiment, the data transmission device 60 is installed at the repeater 30, which is a portion between the trunk cable 25 and the network 50 in a multiple dwelling house, or a node of transmission line and the local network, in order to remove ingress noise. As explained above in the conventional art, in the network 50 in a multiple dwelling house, the more terminal equipments are connected, the more ingress noise is increased, which sometimes disturbs data transmission. In order to prevent such disturbance and to remove ingress noise, the data transmission device 60 consisting of a pair of cable modems is installed at a node of transmission line and the local network.

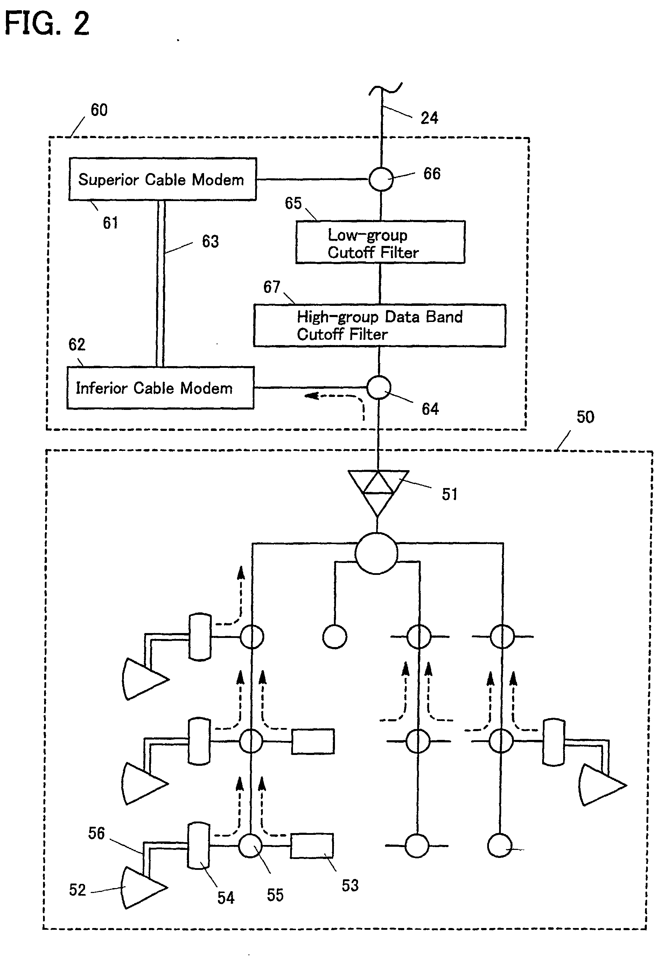

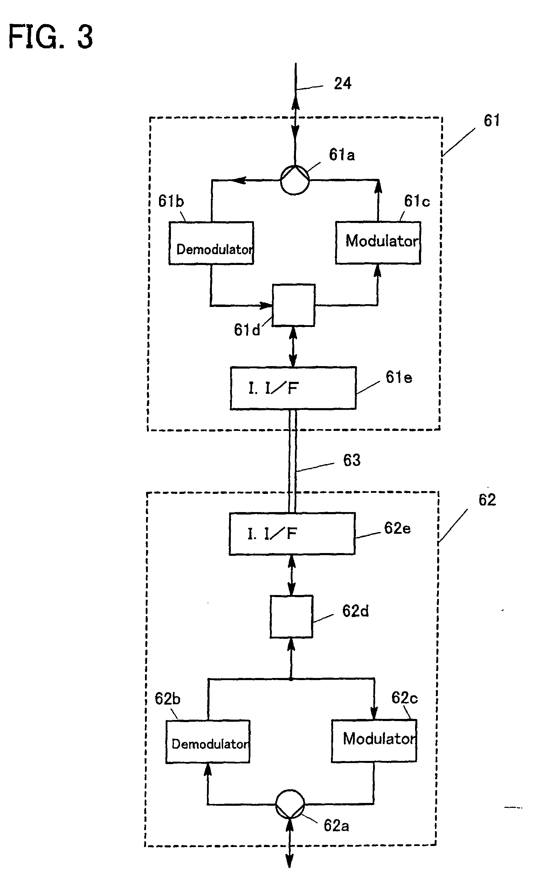

The structure and operation of the device are explained referring to FIGS. 2 and 3 hereinafter.

As shown in FIG. 2, the data transmission device 60 is installed at an exit (entrance) of the network 50 in a multiple dwelling house. The data transmission device 60 comprises: a directional coupler/distributor 64 which branches/distributes upstream high-frequency modulation signal transmitted from an terminal equipment 52; an inferior cable modem 62, which functions as a first modem and modulates the upstream high-frequency modulation signal into Ethernet base band signal; a superior cable modem 61, which functions as a second modem and modulates high-frequency modulation signal according to the Ethernet base band signal into upstream high-frequency modulation signal; a directional coupler/distributor 66 which transmits the re-modulated upstream high-frequency signal to a branch cable 24; a low-group (upstream band) cutoff filter 65 installed between the directional coupler/distributor 64 and the directional coupler/distributor 66; and a high-group data band cutoff filter 67 which cutoffs the above-described high-group band in which downstream high-frequency modulation signal transmits, or 245 MHz band.

Data signal inputted from the terminal equipment 52, which is a computer equipment, is transmitted to a twisted-pair wire 56 in a predetermined communication form (10BASE-T). The Ethernet base band data signal outputted to the twisted-pair wire 56 is inputted to the cable modem 54. Then the signal, e.g., 33 MHz of carrier wave, is modulated according to a modulator in the cable modem. Then the modulated high-frequency modulation signal is outputted.

The sending upstream high-frequency modulation signal passes through the directional coupler 55, the amplifier 51, and the directional coupler/distributor 64, and reaches to the inferior cable modem 62. The upstream high-frequency modulation signal inputted to the inferior cable modem 62 is once demodulated into Ethernet base band signal. As a result, ingress noise brought by the upstream high-frequency modulation signal can be removed. Then the superior cable modem 61 again modulates the carrier wave according to the demodulated data, and transfers the wave as upstream high-frequency modulation signal through the directional coupler/distributor 66 and the branch cable 24. As a result, ingress noise which is integrated in the network 50 in a multiple dwelling house and streams as shown by a broken line in FIG. 2 is completely removed.

Because upstream high-frequency modulation signal outputted from the directional coupler/distributor 64 is interrupted by the low-group cutoff filter 65 and is not transferred to the branch cable 24 side, upstream ingress noise is never outputted to the branch cable 24 functioning as a transmission line. The low-group cutoff filter 65 does not reflect low-group band signal inputted by the directional coupler/distributor 64 but prevents it from passing through. The low-group cutoff filter 65 consists of device which absorbs electric power of low-group band signal by impedance matching. Accordingly, the filter 65 will not affect upstream low-group band signal and downstream high-group data signal in the network 50 in a multiple dwelling house.

FIG. 3 illustrates structures of the inferior cable modem 62 and the superior cable modem 61. The inferior cable modem 62 comprises: a band splitter 62a which separates 33 MHz upstream high-frequency modulation signal; a demodulator 62b which demodulates the distributed high-frequency modulation signal; a computer equipment 62d which inputs the demodulated base band data signal of binary digital signal; an Ethernet interface 62e which transfers an Ethernet base band signal according to the base band data signal of binary digital signal transferred from the computer equipment 62d; and a modulator 62c which is related with downstream data signal. The modulator 62c modulates 245MHz carrier wave according to the base band data signal which is transferred through the Ethernet interface 62e and the computer equipment 62d, and transfers the signal as downstream high-frequency modulation signal to the downstream direction.

The superior cable modem 61 comprises: an Ethernet interface 61e which inputs Ethernet base band signal and converts it into base band signal of binary digital signal; a computer equipment 61d which inputs base band signal of binary digital signal; a modulator 61c which modulates 33MHz carrier wave according to base band signal of binary digital signal outputted by the computer equipment 61d and transfers the carrier wave as high-frequency modulation signal; a band splitter 61a which superposes high-frequency modulation signal to a branch cable 24; and a demodulator 61b which demodulates downstream high-frequency modulation signal. The demodulator 61b demodulates downstream high-frequency modulation signal, which has 245 MHz band and is inputted from the band splitter 61a, into base band signal of binary digital signal, and outputs the signal to the computer equipment 61d.

How the inferior cable modem 62 and the superior cable modem 61 deal with upstream high-frequency modulation signal is explained hereinafter. When upstream high-frequency modulation signal containing ingress noise is inputted to the inferior cable modem 62, low-group upstream high-frequency modulation signal is separated by the band splitter 62a and inputted to the demodulator 62b. The demodulator 62b, whose modulation system is, e.g., QPSK (Quadrature Phase Shift Keying) phase modulation, phase demodulates and transfers the signal to the computer equipment 62d.

The computer equipment 62d further converts the data into, e.g., a predetermined code data, and transfers the data to the Ethernet interface 62e. The Ethernet interference 62e then converts the data into Ethernet base band signal and transfers the signal through the twisted-pair wire 63 to the superior cable modem 61. As described above, that enables to remove ingress noise in upstream high-frequency modulation signal.

Then, in the superior cable modem 61, the computer equipment 61d and the modulator 61c modulates the inputted data into upstream high-frequency modulation signal having the same frequency, or 33 MHz, as that of the signal inputted to the inferior cable modem 62 according to the Ethernet base band signal inputted from the Ethernet interface 62e. Then the signal is transferred through the band splitter 61a to the branch cable 24. Accordingly, the inferior cable modem 62 and the superior cable modem 61 which demodulate and modulate the data enable to remove ingress noise from upstream high-frequency modulation signal.

Downstream high-frequency modulation signal in a transmission line is inputted from the branch cable 24 to the superior cable modem 61 and 245 MHz downstream high-frequency modulation signal in its downstream band is separated by the band splitter 61a. Here demodulation and modulation are carried out in a route completely reverse to that for upstream high-frequency modulation signal. In short, downstream high-frequency modulation signal in the transmission line is demodulated into a base band signal of binary digital signal by the demodulator 61b in the superior cable modem 61, modulated into downstream high-frequency modulation signal having a frequency band of 245 MHz by the modulator 62c in the inferior cable modem 62 and transferred to each terminal equipment 52. If ingress noise is contained in downstream high-frequency modulation signal transferred from the central equipment 22, the noise can be removed in demodulation and modulation process. The downstream high-frequency modulation signal having a frequency band of 245 MHz passes the directional coupler/distributor 66 to the downstream side, but the signal is prevented from passing through the high-group data band cutoff filter 67 and is never transmitted to the downstream side of the filter 67. Accordingly, only a signal re-modulated by the inferior cable modem 62 becomes the downstream high-frequency modulation signal having a frequency band of 245 MHz to be transmitted to downstream side. The high-group data band cutoff filter 67 does not reflect but absorbs only electric power of high-group data band signal by impedance matching, and that prevents the signal from passing to the downstream side. Accordingly, the downstream data signal and the upstream data signal cannot be affected in transmission line of the upstream side.

TV signal inputted from the branch cable 24 into the directional coupler/distributor 66 is outputted to the low-group cutoff filter 65 shown in FIG. 2. The TV signal passes through the low-group cutoff filter 65 and the high-group data band cutoff filter 67, amplified by the amplifier 51 and transferred to each TV signal receiver 53. So the TV signal can be received by connecting a TV signal receiver 53 to the directional coupler 55. And connecting a terminal equipment 52 to the directional coupler 55 enables data transmission. Alternatively, a single-directional amplifier, which amplifies signal to the downstream side, may be installed in place of the low-group cutoff filter 65. That also can interrupt signal in the upstream band.

Accordingly, in order to apply the data transmission system of the present invention, only the data transmission equipment 60 is to be filed at the exit of an existing CATV network, especially a network 50 in a multiple dwelling house. Thus, a LAN can be constructed extremely cheaply.

In the present embodiment, the downstream high-frequency signal received from the transmission line is demodulated. So control signal from the CATV center 20 can be received, which enables the CATV center 20 to control the data transmission equipment 60.

### (Second Example)

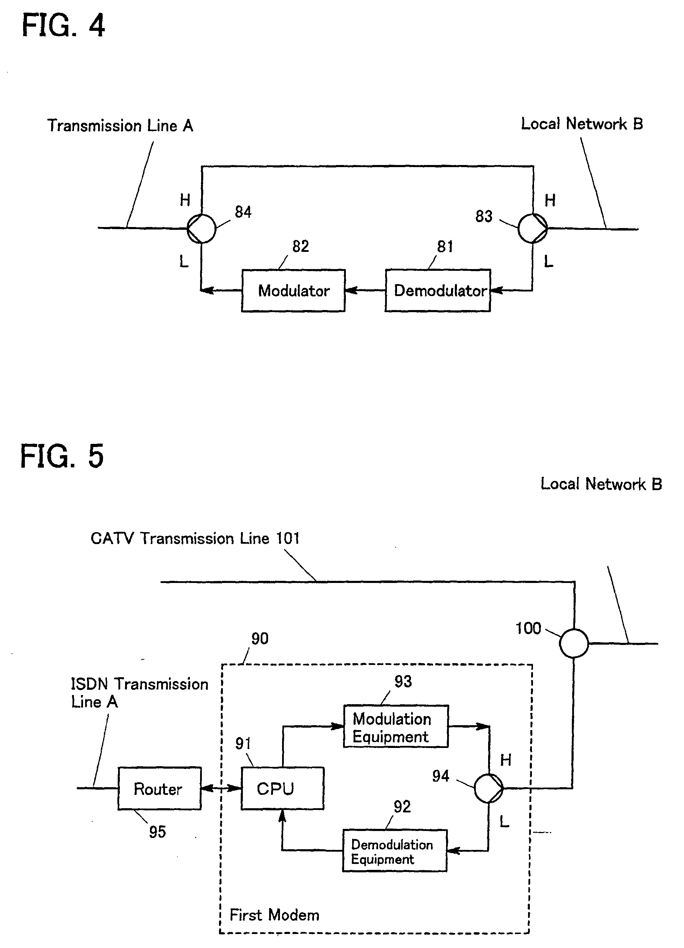

A second embodiment of the present invention is explained hereinafter. Equipments shown in FIG. 4 can be installed at a node of a transmission line and a local network. In FIG. 4, a transmission line A is on the branch cable 24 side and a local network B is on the network 50 of a multiple dwelling house. The transmission line A and the local network B are connected by band splitters 83 and 84. A demodulator 81 and a modulator 82 are installed on a circuit of the upstream low-group band side, while that of the downstream high-group band side is through.

Upstream high-frequency modulation signal transmitted from the local network B is once demodulated into base band signal of binary digital signal by the demodulator 81, modulated again into upstream high-frequency modulation signal having the same frequency band and outputted from the modulator 82.

Downstream high-frequency modulation signal inputted from the transmission line A, functioning as high-group TV signal and data signal, is transmitted from the transmission line A to the local network B by the band splitter 84 and 83. As a result, it becomes possible to receive TV signal and transmit data by using an existing CATV local network system.

In this embodiment, upstream high-frequency modulation signal from the local network B is once demodulated into base band signal, then modulated again into upstream high-frequency modulation signal and transmitted to the transmission line A. Consequently, upstream ingress noise can be removed as same as that shown in the first embodiment. Thus only upstream data signal can be demodulated, modulated and then transferred to the upstream transmission line. In FIG. 4, the demodulator 81 and the modulator 82 are illustrated in separate blocks. Alternatively, a single demodulation equipment which carries out demodulation and modulation in series can be installed.

In this embodiment, in order that the CATV center 20 control the system, a control unit which takes out data signal by demodulating downstream signal in the transmission line A and controls the demodulator 81 and the modulator 82 may be installed.

### (Third Example)

A third embodiment of the present invention is explained hereinafter. In this embodiment, transmission line A is data transmission line for a network system such as ISDN (Integrated Services Digital Network). A CATV transmission line 101 and a local network B are connected with a distributor 100, and the CATV transmission line 101 and a first modem 90 are connected to distribution terminal of the distributor 100. The first modem 90 comprises a band splitter 94, a demodulator 92, a modulator 93, and a CPU (central processing unit) 91. The CPU 91 is connected to a router 95 which is connected to ISDN transmission line.

Upstream high-frequency modulation signal outputted from the local network B passes through the distributor 100 and the low-group terminals of a band splitter 94, and is inputted to the demodulator 92 to be demodulated into base band signal of binary digital signal. Then the signal is inputted to the CPU 91, transferred through the router 95, and outputted to ISDN transmission line. Accordingly, the signal is outputted to Internet through ISDN transmission line.

On the contrary, data signal from Internet is received by the router 95, outputted to the CPU 91, modulated by the modulator 93 into high-group and high-frequency modulation signal in downstream direction, transferred through the band splitter 94 and the distributor 100, and outputted to the local network B. As a result, ingress noise which exists in data signal outputted from the local network B to the transmission line A can be removed. The local network B can also have duplex transmission for the CATV transmission line 101.

### (Modified Example)

Thus embodiments of the present invention are explained above. Alternatively, a various modification can be considered.

In the first embodiment, the low-group cutoff filter 65 is installed at the upstream side (the CATV center 20 side) of the high-group data band cutoff filter 67. Alternatively, the high-group data band cutoff filter 67 can be placed at the upstream side of the low-group cutoff filter 65.

Alternatively, a single-direction amplifier 68 which only amplifies downstream high-group band signal to the downstream side can be installed between the high-group data band cutoff filter 67 and the low-group cutoff filter 65 as shown in FIG. 6. In this case, upstream low-group band signal outputted from the directional coupler/distributor 64 to the upstream side is not reflected but absorbed by the low-group cutoff filter 65, and the signal is not propagated to the output side of the amplifier 68.

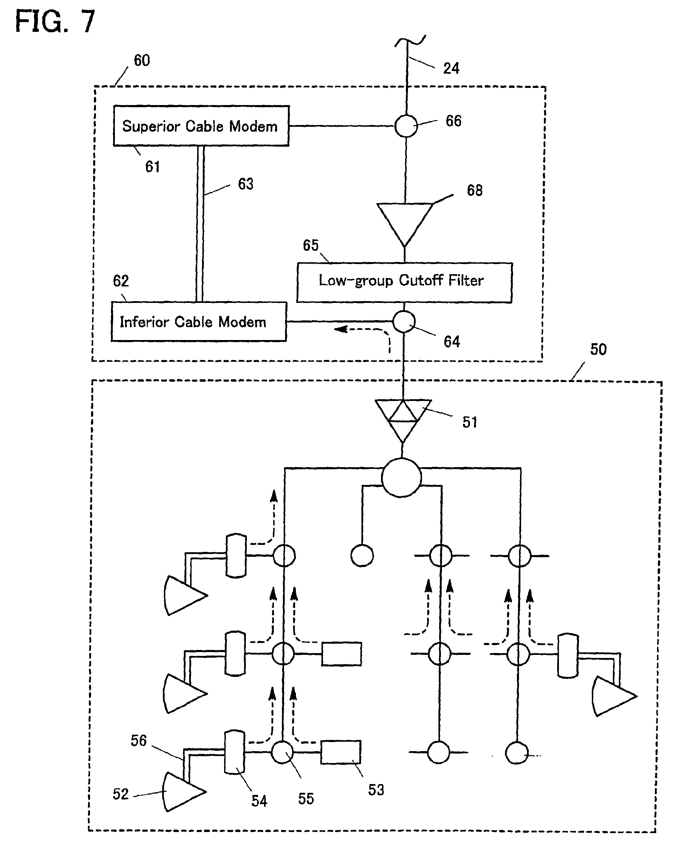

Alternatively, as shown in FIG. 7, the high-group data band cutoff filter 67 shown in FIG. 6 can be removed and a low-group cutoff filter 65 may be installed at the output side of the amplifier 68. In this case, upstream low-group band signal outputted from the directional coupler/distributor 64 to the upstream side is not reflected but absorbed by the low-group cutoff filter 65, and the signal is not propagated to the output side of the amplifier 68. In the system shown in FIG. 7, downstream high-frequency modulation signal, or downstream data signal, is amplified by the amplifier 68 and transmitted to the side of the network 50 in a multiple dwelling house. In the meantime, downstream high-frequency modulation signal, or downstream data signal, is demodulated by the superior cable modem 61, modulated by the inferior cable modem 62, and then outputted to the side of the network 50 in a multiple dwelling house. In this case, the band of the signal outputted from the inferior cable modem 62 is different from that of downstream high-frequency modulation signal, or data signal inputted to the superior cable modem 61. Accordingly, downstream data signal cannot be interfered in the network 50 in a multiple dwelling house.

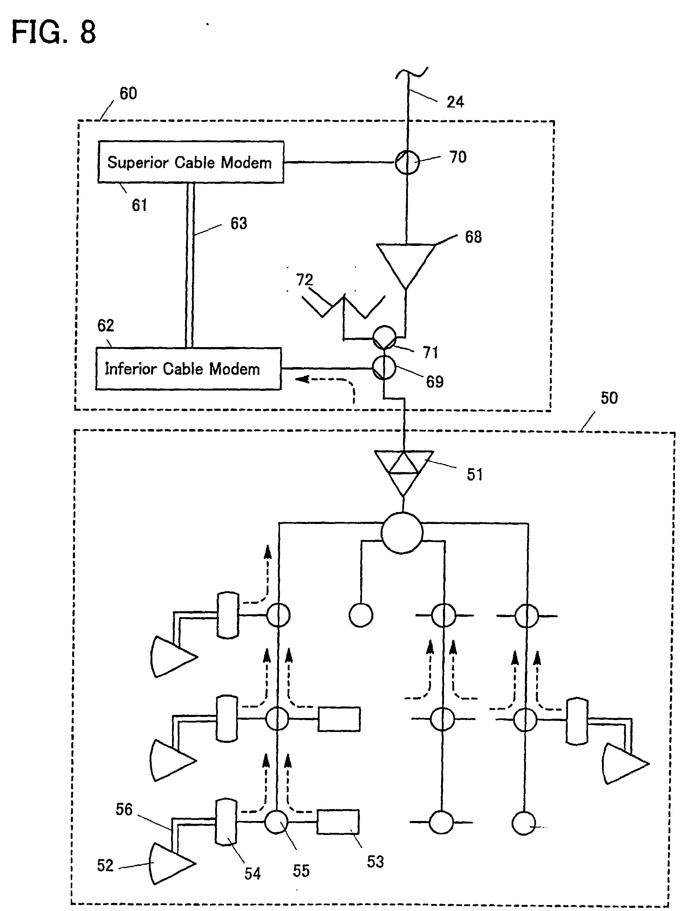

Alternatively, a system shown in FIG. 8 can be applied. In the system of FIG. 8, directional couplers 69 and 70 are used in place of the directional coupler/distributor 64 and 66 in FIG. 7. A band splitter 71 is connected at the upstream side terminal of the directional coupler 69, and a terminating resistance 72 is connected to a low-group filter output terminal of the band splitter 71. In short, in the system shown in FIG. 8, the low-group cutoff filter 65 in FIG. 7 is replaced by the band splitter 71, which separates low-group band and high-group band, and the terminating resistance 72. Because of that, upstream high-frequency modulation signal, or upstream data signal outputted from the network 50 in a multiple dwelling house to the upstream side, is transferred through the directional coupler 69, outputted to the band splitter 71, and then absorbed by the terminating resistance 72. Because of that, the upstream high-frequency modulation signal is prevented from reflecting to the side of the network 50 in a multiple dwelling house. As a result, wave form of the upstream high-frequency modulation signal in the network 50 in a multiple dwelling house cannot be disturbed.

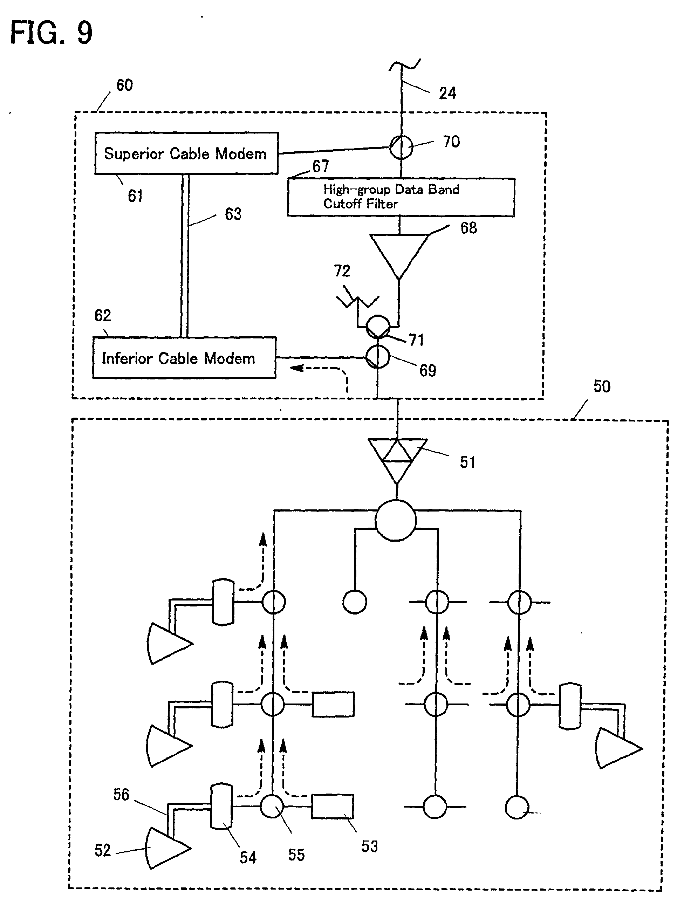

As shown in FIG. 9, a high-group data band cutoff filter 67 can be further installed at the input side of the amplifier 68 in the system of FIG. 8. In the system shown in FIG. 8, band of downstream high-frequency modulation signal, which is downstream data signal outputted by the inferior cable modem 62 to the downstream side, is different from that of downstream high-frequency modulation signal, which is downstream data signal inputted by the superior cable modem 61 from the upstream side. On the contrary, in the system shown in FIG. 9, downstream data signal is cut off by the high-group data band cutoff filter 67, which enables to use the band of the downstream data signal. That is, in the system shown in FIG. 9, the band of the downstream high-frequency modulation signal, which is downstream data signal outputted by the inferior cable modem 62 to the downstream side, corresponds to that of the downstream high-frequency modulation signal, which is downstream data signal inputted by the superior cable modem 61 from the upstream side. The high-group data band cutoff filter 67 in FIG. 9, having the equivalent function as the band splitter 71 and the terminating resistance 72 in FIG. 8, absorbs downstream data band signal at the terminating resistance but does not reflects the signal to the upstream side.

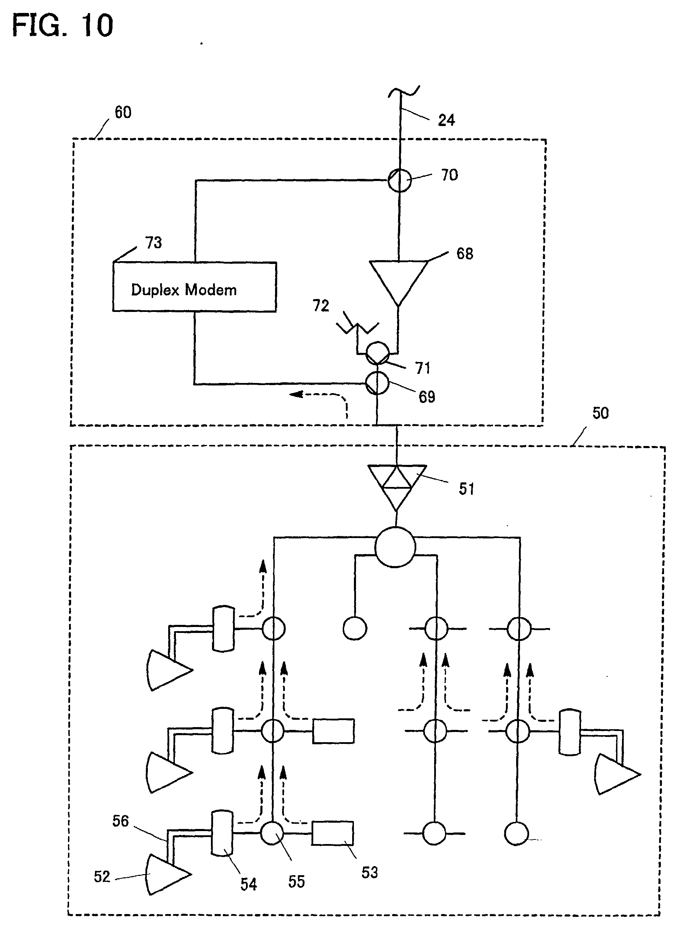

Alternatively, a system shown in FIG. 10 can be applied. In FIG. 10, a duplex modem 73 is used in place of the superior cable modem 61, the inferior cable modem 62, and the twisted-pair wire 63. In the first embodiment, when a signal is demodulated and modulated, it is once converted into a base band signal of Ethernet. Alternatively, the modem 73 in FIG. 10 does not necessarily converts a signal into Ethernet base band signal. The modem 73 just demodulates a high-frequency signal into a base band data signal and modulates it into a high-frequency modulation signal again. Because in a system of FIG. 10 a high-frequency modulation signal in high-group data band transfers the amplifier 68 to the downstream side, high-group data band of the upstream (input) side is adjusted to be different from high-group data band of the downstream (output) side in order that the duplex modem 73 modulates the signal to the downstream side again. By installing the high-group data band cutoff filter 67 at the input side of the amplifier 68 in the system of FIG. 10 as in FIG. 9, a high-group data band of the upstream side can be equivalent to that of the downstream side in the duplex modem 73.

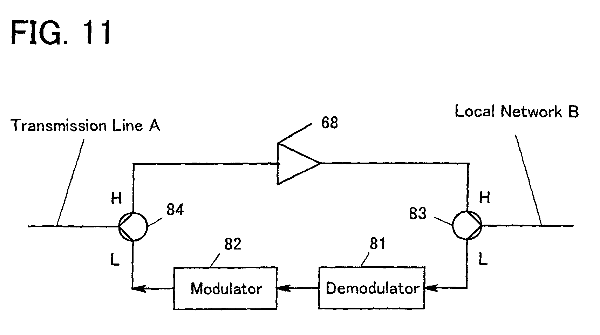

In the second embodiment, only upstream data signal is modulated and outputted. Alternatively, the second embodiment can have a structure shown in FIG. 11. That is, a single-directional amplifier 68 is installed in a circuit of the downstream high-group band side in FIG. 4. By installing the single-directional amplifier 68 as in FIG. 11, a high-group band signal can be transferred to the local network B as in a conventional system, which enables to demodulate and modulate only data signal of low-group band and transfer to the transmission line A.

Other embodiments can be explained as follows.

In the first, second and third embodiments, the present device which removes noise is installed at an exit of the network 50 in a multiple dwelling house. Alternatively, the device of the present invention can be installed anywhere ingress noise increases. It can be installed on a trunk cable, inside of the network 50 in a multiple dwelling house, etc.

In the above embodiments, the local network B represents a TV community network in a multiple dwelling house, a factory, a hospital, and so on. Alternatively, the local network B can be transmission line (LAN) of high-frequency transmission not necessarily transmitting TV signal.

In the above embodiments, transmission of upstream data and downstream data are carried out by carrier wave having respectively different frequency. Alternatively, upstream and downstream data can be carried out by carrier wave having the same frequency. In this system, data transmission is carried out in the same channel by utilizing an idle time. Such system can be applied to a small-scale LAN which does not require any amplifier.

Alternatively, a frequency band used in the above embodiment can be an unused band. Upstream high-frequency modulation signal or downstream high-frequency modulation signal can be assigned to an arbitrary frequency band in case that it does not cause trouble to a CATV system. And downstream high-frequency modulation signal can be assigned to an idle frequency band of a channel which is used by TV signal.

In the above embodiment, transmission line stands for transmission line in a CATV system or transmission line in ISDN. Alternatively, it may be used as any transmission line which can be connected to a LAN such as OCN (Open Communication Network). Further alternatively, it may be other transmission line which is made of other medium such as a broadcast wave including ground broadcast and satellite broadcast, a microwave, and a light space transmission.

While the invention has been described in connection with what are presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A data transmission system having a local network to which plural terminal equipments are connected and whose data transmission is carried out by using a high-frequency modulation signal and a transmission line to which the local network is connected, comprising:
a demodulator which demodulates upstream high-frequency modulation signal transmitted toward the transmission line side into a data signal is installed at a node of said local network and said transmission line.

2. A data transmission system according to claim 1, further comprising a modulator which modulates a data signal demodulated by said demodulator into upstream high-frequency modulation signal at said node of said local network.

3. A data transmission system having a local network to which plural terminal equipments are connected and whose data transmission is carried out by using a high-frequency modulation signal and a transmission line to which the local network is connected, comprising:
a modem which demodulates upstream high-frequency modulation signal transmitted toward the transmission line side into a data signal and modulates said data signal into upstream high-frequency modulation signal at a node of said local network and said transmission line.

4. A data transmission system according to claim 1, comprising a first modem comprising said demodulator, and a modulator which modulates a data signal obtained from downstream signal into downstream high-frequency modulation signal and transmits to said local network at said node.

5. A data transmission system according to claim 4, further comprising a second modem which modulates a data signal demodulated by said first modem into upstream high-frequency modulation signal and transmits said upstream high-frequency modulation signal to said transmission line, and demodulates downstream high-frequency modulation signal received from said transmission line into a data signal and outputs said data signal to said first modem.

6. A data transmission system having a local network to which plural terminal equipments are connected and whose data transmission is carried out by using a high-frequency modulation signal and a transmission line to which the local network is connected, comprising:
a duplex modem which demodulates upstream high-frequency modulation signal transmitted to said transmission line into a data signal, modulates said data signal into upstream high-frequency modulation signal, demodulates downstream high-frequency modulation signal transmitted to said local network into a data signal and modulates said data signal into downstream high-frequency modulation signal at a node of said local network and said transmission line.

7. A data transmission system according to claim 2, further comprising an amplifier which is connected in parallel to a connection circuit of said demodulator and said modulator by a directional coupler/distributor of an upstream side and a directional coupler/distributor of a downstream side and which amplifies and outputs said downstream signal toward said local network.

8. A data transmission system according to claim 3, further comprising an amplifier which is connected in parallel to said modem by a directional coupler/distributor of an upstream side and a directional coupler/distributor of a downstream side and which amplifies and outputs said downstream signal toward said local network.

9. A data transmission system according to claim 5, further comprising an amplifier which is connected in parallel to a circuit of said first modem and said second modem by a directional coupler/distributor of an upstream side and a directional coupler/distributor of a downstream side and which amplifies and outputs said downstream signal toward said local network.

10. A data transmission system according to claim 6, further comprising an amplifier which is connected in parallel to said duplex modem by a directional coupler/distributor of an upstream side and a directional coupler/distributor of a downstream side and which amplifies an outputs said downstream signal toward said local network.

11. A data transmission system according to any one of claims 7 to 10, further comprising:
a band splitter installed between an output terminal of said amplifier and said directional coupler/distributor of the downstream side; and
a terminating resistance set at an output terminal of a low-group band pass filter of said band splitter.

12. A data transmission system according to claim 4, wherein said transmission line is a data transmission line and further comprising:
a router or a terminal adaptor which inputs, modulates and outputs a data signal demodulated by said first modem to said transmission lien and which receives, demodulates said downstream signal in said transmission line into a data signal and outputs to said first modem at a node of said local network.

13. A data transmission system according to any one of claims 1 to 11, wherein said transmission line is a CATV transmission line and said local network is a community TV network adjusted in a predetermined area such as a multiple dwelling house, a building, and a factory in which plural numbers of terminal equipments are connected.

14. A data transmission system according to claim 13, wherein a center of said CATV network transmission line is connected to Internet, receives upstream high-frequency modulation signal from said transmission line, demodulates it to a signal, transmits said signal to Internet, receives a signal from Internet, modulates said signal into downstream high-frequency modulation signal, and transmits it to said transmission line.

15. A data transmission system according to any one of claims 1 to 14, wherein said transmission line is connected to Internet.

16. A data transmission system according to any one of claims 1 to 14, wherein said local network consists of a network comprising transmission lines which are branched in a CATV network.

17. A data transmission equipment, in a data transmission system having a local network to which plural terminal equipments are connected and whose data transmission is carried out by using a high-frequency modulation signal and a transmission line to which the local network is connected, installed at a node of said local network and said transmission line, comprising:
a first modem which demodulates upstream high-frequency modulation signal into a data signal and which modulates data signal obtained from downstream high-frequency modulation signal of said transmission line into downstream high-frequency modulation signal; and
a second modem which modulates said data signal demodulated by said first modem into upstream high-frequency modulation signal and transmits to said transmission line and which demodulates downstream high-frequency modulation signal received from said transmission line into data signal and outputs it to said first modem.

18. A data transmission equipment, in a data transmission system having a local network to which plural terminal equipments are connected and whose data transmission is carried out by using a high-frequency modulation signal and a transmission line to which the local network is connected, installed at a node of said local network and said transmission line, comprising:
a modem which demodulates upstream high-frequency modulation signal transmitted to said transmission line side and modulates said data signal into upstream high-frequency modulation signal.

19. A data transmission equipment, in a data transmission system having a local network to which plural terminal equipments are connected and whose data transmission is carried out by using a high-frequency modulation signal and a transmission line to which the local network is connected, installed at a node of said local network and said transmission line, comprising:
a duplex modem which demodulates upstream high-frequency modulation signal transmitted to said transmission line side into data signal and modulates said data signal into upstream high-frequency modulation signal, demodulates downstream high-frequency modulation signal transmitted to said local network side into data signal and demodulates said data signal into downstream high-frequency modulation signal.

20. A data transmission equipment according to any one of claims 17 to 19, wherein said data transmission equipment comprises directional coupler/distributors placed on both upstream and downstream sides, a through circuit connected to said two directional coupler/distributors, and a low-group cutoff filter which does not reflect but absorbs upstream low-group band signal and lets downstream signal pass to said downstream side.

21. A data transmission equipment according to any one of claims 17 to 19, wherein said data transmission equipment comprises an amplifier which amplifies and outputs downstream signal to said local network side, directional coupler/distributors placed on input port and output port sides of said amplifier, a band splitter placed between output port of said amplifier and said directional coupler/distributor on said output port side, and a terminating resistance set on a low-group band pass filter side of said band splitter.

22. A data transmission equipment according to claim 21, further comprising a high group data band cutoff filter which is placed between input port of said amplifier and said directional coupler/distributor set on said input port side and cutoffs downstream signal of predetermined high-group data band.

23. A data transmission equipment according to claim 18, wherein said data transmission equipment comprises a pair of band splitters each placed on upstream and downstream sides, a through circuit, connecting said two band splitter, which let a high-group band signal pass, or an amplifier which is injected in a circuit, through which said high-group band signal passes, and amplifies signal to said downstream direction.

24. A data transmission equipment according to claim 21, further comprising high-group data band cutoff filter which does not reflect and does not let a predetermined high-group data band signal pass is set between said input port of said amplifier and said output port of said directional coupler/distributor installed on said input side of said amplifier.
